# EUROPEAN PATENT SPECIFICATION

(11) **EP 2 302 735 B1**
(45) Date of publication and mention of the grant of the patent: **25.09.2013**
(21) Application number: 11150249.8
(22) Date of filing: 27.12.2006
(51) Int. Cl.: G01S 7/03, H01Q 3/04, H01Q 3/14, H01Q 1/42, H01Q 15/02, H01Q 25/00, G01S 13/95, H01Q 19/06

(54) **Weather radar apparatus comprising an electromagnetic lens antenna device**
Wetterradarvorrichtung mit einer elektromagnetischen Linsenantenneneinrichtung
Appareil radar météorologique avec un dispositif d' antenne lentille électromagnétique

(30) Priority: 28.12.2005 JP 2005379858
(43) Date of publication of application: 30.03.2011
(62) Divisional of application: 06843759.9
(73) Proprietor: Sumitomo Electric Industries, Ltd., Osaka-shi, Osaka 541-0041 (JP)
(72) Inventor: Imai, Katsuyuki, Osaka 541-0041 (JP)
(74) Representative: Cross, Rupert Edward Blount

(56) References cited:
- EP-A2- 1 089 377
- WO-A-98/49745
- JP-A- 11 014 749
- JP-A- 2003 110 352
- US-A- 5 781 163
- US-B1- 6 333 718

## Description

### TECHNICAL FIELD

The present invention relates to an electromagnetic lens antenna device that uses electromagnetic lenses for emitting and receiving radio waves.

### BACKGROUND ART

Various type of radar apparatuses are generally used for weather observation and air control. Such a radar apparatus emits high-frequency radio waves such as microwaves toward a target from an antenna, and receives reflected waves to detect the size, shape, distance, and speed of the target. For example, a weather radar apparatus emits radio waves to water droplets in the atmosphere and detects the size of a precipitation area and the precipitation amount by analyzing received reflected waves.

Such radar apparatuses include the monostatic type and the bistatic type. A monostatic radar apparatus emits and receives signals using a single antenna. That is, a monostatic radar apparatus alternately connects the antenna to a transmitter and a receiver. A bistatic radar apparatus has two antennas, or a transmission antenna connected to a transmitter and a reception antenna connected to a receiver.

For example, Japanese Laid-Open Patent Publication No. 11-14749 discloses a monostatic radar apparatus including a transmitter, an antenna, a receiver, and a circulator. The transmitted generates and outputs high-frequency pulsed signals. The antenna emits the high-frequency signals generated by the transmitter as high-frequency radio waves, receives the high-frequency radio waves reflected by a target, and outputs received radio waves to the receiver. The circulator switches between the transmission of high-frequency signals from the transmitter to the antenna and the transmission of high-frequency signals from the antenna to the receiver.

To expand the detection range (the distance within which detection is possible), a typical radar apparatus, needs to use a relatively great transmission power (several tens of watts to several kilowatts) and to be capable of receiving extremely weak signals (dynamic range cf 150 dB or greater). However, in a monostatic radar apparatus, approximately one hundredth (-20 dB) of the transmission power from the transmitter leaks to the receiver. This significantly degrades the observation performance of the radar apparatus and damages the receiver.

To solve the problem, the above publication discloses a radar apparatus having a transmitter that generates and outputs high-frequency pulsed signals. The apparatus includes a protection switch for protecting the receiver. The protection switch is located, for example, between the circulator and the receiver. To protect the receiver, the protection switch is turned on when radio waves are being transmitted and blocks leaking electric power from the transmitter. When receiving radio waves, the power of the transmitter is turned off to suppress leaking of the electric power.

The maximum detection range of a radar is mainly determined by an average transmission power and the performance of the antenna that is being used. However, since a monostatic radar apparatus transmits high-frequency pulsed signals, the average transmission power is smaller for the same peak power compared to the case where transmitted high-frequency signals are not pulsed,

Therefore, in the case where high-frequency pulsed signals are transmitted and the average transmission power is thus halved, the area of the antenna must be doubled for obtaining a maximum detection range that is the same as that in the case where the signals are not pulsed. This increases the size of the radar apparatus and the costs. Also, since the duty ratio (transmission period/cycle of pulse repetition) of the high-frequency pulsed signals is several percent, the observation performance of the radar apparatus is significantly degraded.

The above described problems are not present in a bistatic radar apparatus, which incudes separately provided transmission antenna and reception antenna. This apparatus effectively suppresses leaking of electric power from the transmitter. Further, since the transmitter generates and outputs high-frequency signals, the observation performance is significantly improved compared to monostatic radar apparatus.

A typical bistatic radar apparatus has two antennas, the outer diameters of which are in the range of several tens of centimeters to several meters. Therefore, in a case where a bistatic radar is used in a weather radar apparatus, a drive mechanism of a complicated structure is reeved for actuating an antenna that performs beam scanning on the space above the ground level (hereinafter, referred to as volume scanning). For example, when the antenna is rotated at a high rate in horizontal and vertical directions of one revolution per second (60 rpm), the rotation torque is great. A great load is thus applied to the antenna drive mechanism. The antenna device is thus likely to be damaged. This shortens the life of the apparatus. To make the apparatus to withstand such rotational torque, the strengths of members for supporting the antenna and the drive mechanism need to be increased. This also increases the size and costs of the antenna device.

US 5,781,163 discloses a low profile hemispherical lens antenna on a ground plane. The entire antenna and ground plane may be rotated and an array of point sources, located adjacent to respective hemispherical lenses, may be moved relative to the hemispherical lenses so as to scan the antenna beam over a hemisphere.

### DISCLOSURE OF THE INVENTION

Accordingly, it is an objective of the present invention to provide a weather radar apparatus comprising a bistatic electromagnetic lens antenna device that is capable of performing volume scanning with an inexpensive and simple configuration and has a reduced weight and an extended life.

To achieve the foregoing objective and in accordance with one aspect of the present invention, there is provided a weather radar apparatus comprising an electromagnetic lens antenna device as set out in claim 1 and a corresponding method as set out in claim 5.

There is also described an electromagnetic lens antenna device including two spherical electromagnetic lenses for transmission and reception, at least two primary radiators, a holding member, a rotating member, and a support member is provided. Each electromagnetic lens is formed of a dielectric material. The relative permittivity of each electromagnetic lens changes at a predetermined rate along a radial direction. Each primary radiator is located at a focal point of one of the electromagnetic lenses. The holding member holds the primary radiators, and rotates about a first axis that extends through the centers of the electromagnetic lenses. The rotating member rotates about a second axis, which is perpendicular to the first axis. The support member supports the holding member on the rotating member. The primary radiators are rotated about the first axis together with the holding member, and are rotated about

the second axis together with the rotating member.

In accordance with another aspect, an electromagnetic lens antenna device including two spherical electromagnetic lenses for transmission and reception, at least two first primary radiators, a first holding member, a rotating member, a first support member, at least two second primary radiators, a second holding member, and a second support member is provided. Each electromagnetic lens is formed of a dielectric material. The relative permittivity of each electromagnetic lens changes at a predetermined rate along a radial direction. Each first primary radiators is located at a focal point of one of the electromagnetic lenses. The first holding member holds the first primary radiators, rotates about a first axis that extends through the centers of the electromagnetic lenses. The rotating member rotates about a. second axis, which is perpendicular to the first axis. The first support member supports the first holding member on the rotating member. Each second primary radiator is located at a focal point of one of the electromagnetic lenses. The second holding member holds the second primary radiators, and rotates about the first axis. The second support member supports the second holding member on the rotating member. The first primary radiators are rotated about the first axis together with the first holding member, and are rotated about the second axis together with the rotating member. The second primary radiators are rotated about the first axis together with the second holding member, and are rotated about the second axis together with the rotating member.

In accordance with a further aspect, an electromagnetic lens antenna device including

two spherical electromagnetic lenses, at least two primary radiator, a holding member, a rotating member, and a support member is provided. Each electromagnetic lens is formed of a dielectric material. The relative permittivity of each electromagnetic lens changes at a predetermined rate along a radial direction. Each primary radiator is located at a focal point of one of the electromagnetic lenses. The holding member holds the primary radiators such that each primary radiator is located at a focal point of the corresponding electromagnetic lens. The holding member extends along an arc of a circle the center of which coincides with a first axis extending through the centers of the electromagnetic lenses. The rotating member rotates about a second axis, which is perpendicular to the first axis. The support member supports the holding member on the rotating member. The primary radiators are moved about the first axis along the holding member, and are rotated about the second axis together with the rotating member. ,

Other aspects and advantages of the invention will become apparent from the following description, taken in conjunction with the accompanying drawings, illustrating by way of example the principles of the invention.

### BRIEF DESCRIPTION OF THE DRAWINGS

The invention, together with objects and advantages thereof, may best be understood by reference to the following description of the presently preferred embodiments together with the accompanying drawings in which:
Fig. 1 is a perspective view illustrating an electromagnetic lens antenna device according to a first example;
Fig. 2 is a diagram for explaining an operation of primary radiators for transmission;
Fig. 3 is an enlarged partial perspective view illustrating supporting members for supporting electromagnetic lenses;
Fig. 4 is a block diagram showing an electric circuit of a radar apparatus provided with the electromagnetic lens;
Fig. 5 is a plan view illustrating an electromagnetic lens antenna device according to a modification;
Fig. 6 is a perspective view illustrating an electromagnetic lens antenna device according to the present invention;
Fig. 7 is a perspective view illustrating an electromagnetic lens antenna device according to a modification;
Fig. 8 is an enlarged cross-sectional view illustrating a portion including a rotary joint; and
Fig. 9 is a perspective view illustrating an electromagnetic lens antenna device according to a modification.

### BEST MODE FOR CARRYING OUT THE INVENTION

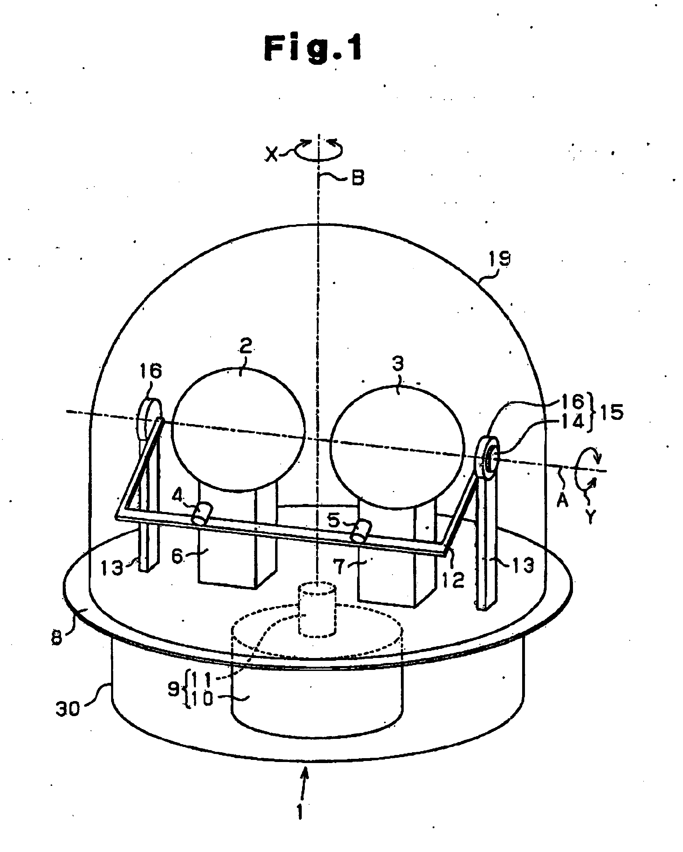

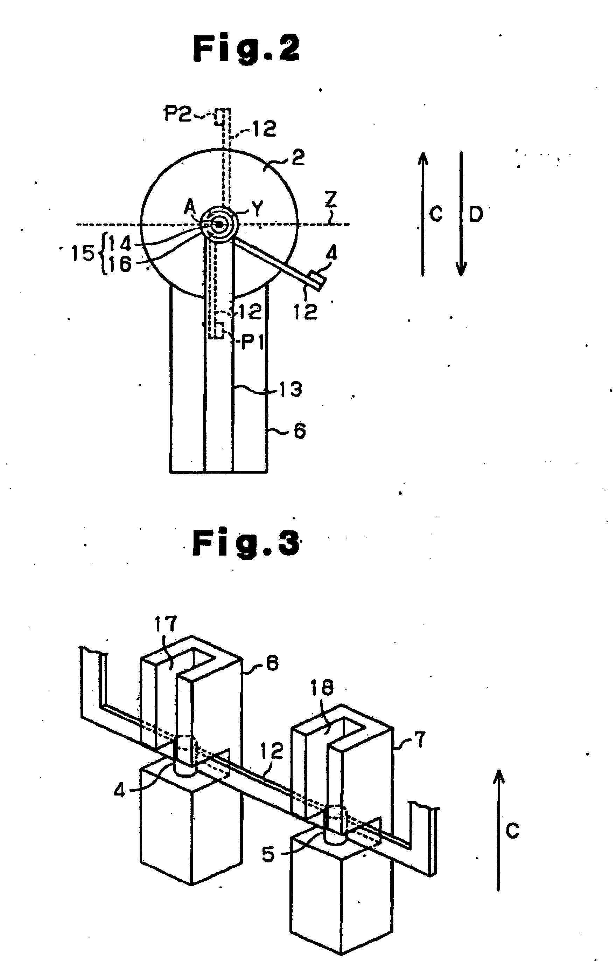

One example, as background to the present Invention will now be described with reference to Figs. 1 to 4.

As shown in Fig. 1, an electromagnetic lens antenna device 1 includes an electromagnetic lens 2 for transmission, an electromagnetic lens 3 for reception, a primary radiator 4 located at the focal point of the electromagnetic lens 2, and a primary radiator 5 located at the focal point of the electromagnetic lens 3.

The electromagnetic lenses 2, 3 are spherical Luneberg lenses. A Luneberg lens is formed of dielectric material and includes a spherical core located at the center, and a plurality of spherical shells of different diameters covering the core. The dielectric material refers to a material that displays paraelectricity, ferroelectricity, or antiferroelectricity, and has no electric conducting property. The relative permittivity of the electromagnetic lenses 2, 3 changes at a constant rate along a radial direction. In each of the electromagnetic lenses 2, 3, the relative permittivity εγ satisfies an expression εγ = 2 - (r/R)². The relative permittivity at the center is two, and approaches one toward the periphery. In the expression, the symbol R represents the radius of the sphere and the symbol r represents the distance from the center. In the present embodiment, the radius of the electromagnetic lenses 2, 3 is set, for example, to 600 mm or 450 mm.

A dielectric material for the Luneberg lens may be a foam of a polyolefin based synthetic resin, such as a polyethylene resin, a polypropylene resin, and a polystyrene resin. An inorganic high-dielectric filler such as titanium oxide, titanate, and zirconate may be added to the synthetic resin to form the foam. The relative permittivity of such a dielectric foam is adjusted by controlling the specific gravity by differentiating the expansion ratio. The higher the specific gravity of the foam, the higher the relative permittivity becomes.

A dielectric foam may be formed through a chemical foaming method in which a foaming agent that generate nitrogen gas when decomposed by heat is added to a raw material (simple substance of a synthetic resin or a mixture of a synthetic resin and inorganic high-dielectric filler), and the resultant is introduced into a die, where it is caused to foam. Alternatively, a dielectric foam may be formed through a bead expansion method in which pellet material that has been impregnated with a volatile foaming agent is caused to foam outside a die, and obtained beads are introduced into the die. The die is then headed with steam so that the beads foam again and are fusion bonded.

The electromagnetic lenses 2, 3 are supported on a table 8 serving as a rotating member with support bodies 6, 7 formed like quadrangular prisms such that the centers of the lenses 2, 3 are located on a first axis A. The table 8 is rotatable in an azimuth direction (direction indicted by arrow X in Fig. 1) about a second axis B on which the center of the table 8 is located. The second axis B is perpendicular to the first axis A, on which the centers of the electromagnetic lenses 2, 3 are located. To support the weight of the electromagnetic lenses 2, 3 and the support bodies 6, 7 and to withstand high speed rotation of the table 8, the table 8 is preferably light. Thus, for example, a fiber reinforced plastic (FRP) is suitable as the material of the table 8. As the fiber reinforcement of the FRP, glass fiber, aramid fiber, or quartz fiber may be used. As a plastic used as the matrix of the FRP, for example, an unsaturated polyester resin, a phenolic resin, an epoxy resin, or a bismaleimide resin may be used. Further, the table 8 may be made of a metal plate. In this case, by drawing the metal plate to form a rib, the weight of the table 8 can be reduced.

To further reduce the weight of the table 8, the table 8 may have a sandwich construction. For example, the table 8 may be formed of polyester foam and fiber reinforced plastic covering the sides of the foam. Instead of foam, a honeycomb (aluminum or aramid) may be used.

A base 30 is located under the table 8. The base 30 accommodates a drive unit 9 for driving the table 8. The drive unit 9 includes a motor 10 and a shaft 11 rotated by the motor 10. Drive force of the motor 10 is transmitted to the table 8 via the shaft 11, so that the table 8 is rotated in the azimuth direction about the second axis B. Accordingly, the whole space along the entire azimuth direction X can be scanned.

As the primary radiators 4, 5, electromagnetic horn antennas having a substantially rectangular or substantially circular opening or dielectric rod antennas having a dielectric rod attached to a waveguide tube are used. Alternatively, microstrip antennas or slot antennas may be used. Radio waves emitted from and received by the primary radiators 4, 5 may be linearly polarized waves (for example, vertically-polarized waves or horizontally-polarized waves) or circularly-polarized waves (for example, right-handed polarized waves or left-handed polarized waves).

The primary radiators 4, 5 are rotatable in a direction of the elevation angle (direction arrow Y in Fig. 1). That is, the primary radiators 4, 5 are movable along the surfaces of the electromagnetic lenses 2, 3. The direction of the elevation angle refers to a direction of rotation about the first axis A, on which the centers of the electromagnetic lenses 2, 3 are located. The primary radiators 4, 5 are attached to an arm 12, which serves as a holding member. The arm 12 is formed to have a substantially U shape. A pair of support members 13 for supporting the arm 12 are provided on the table 3. The arm 12 is attached to the upper ends of the support members 13 with drive units 15 such that the arm 12 is rotatable in the direction of the elevation angle. The arm 12 may be made of any light metal material. If not exposed to the outside air, the arm 12 may be made of wood. Each drive unit 15 includes a motor 16 and a shaft 14. When drive force of the motors 16 is transmitted to the arm 12 via the shafts 14, the arm 12 is rotated about the first axis A in the direction of the elevation angle. The primary radiators 4, 5 are rotated in the direction of elevation angle about the first axis A together with the arm 12. When the horizontal direction is defined as 0°, and the vertically downward angle is defined as -90°, the arm 12 and the primary radiators 4, 5 is rotated in the range between -90° and 90°, inclusive, about the first axis A. That is, the primary radiator 4 is rotated from a position P1 for scanning a space in the zenith direction (in a direction of arrow C, vertically upward) to a position P2 for scanning a space in the ground surface direction (in a direction of arrow D, vertically downward). Accordingly, a space in a wide range along the direction Y of the elevation angle can be scanned.

The primary radiators 4, 5 are supported on the table 8 with the arm 12 and the support members 13. Therefore, the primary radiators 4, 5 are rotated about the second axis B in the azimuth direction together with the table 8, so that volume scanning is possible in all the azimuth directions.

In this manner, the arm 12 holds the primary radiators 4, 5, and is rotatable in the direction of the elevation angle about the first axis A. The arm 12 is also rotatable about the second axis B in the azimuth direction. Therefore, the primary radiators 4, 5 are rotated about the first axis A in the direction of the elevation angle together with the arm 12, and are rotated in the azimuth direction about the second axis B together with the table 8. This configuration requires no complicated drive mechanism for performing volume scanning, and thus simplifies the construction of the electromagnetic lens antenna device 1. Also, compared to the prior art configuration, the torque required for rotating the arm 12 and the table 8 is small, which eliminates the necessity for high-strength and heavy support members and drive mechanism. Therefore, the costs of the electromagnetic lens antenna device 1 is prevented from increasing, and the device 1 is reduced in size and weight. When performing volume scanning, the load on the electromagnetic lens antenna device 1 is reduced, which extends the life of the device 1.

Since the arm 12 is rotated in the range between -90° and 90°, inclusive, about the first axis A, complicated volume scanning can be easily performed with a simple structure.

High-frequency radio waves are emitted from the primary radiator 4 along a line extending through the centers of the electromagnetic lens 2 and the primary radiator 4. Also, high-frequency radio waves are received by the primary radiator 5 along a line extending through the centers of the electromagnetic lens 3 and the primary radiator 5. Therefore, in the present embodiment, accommodating portions, 17, 18 having a rectangular cross-section are formed in the support bodies, 6, 7. When emitting high-frequency radio waves toward the zenith, the primary radiator 4 is temporarily accommodated in the accommodating portion 17, so that the primary radiator 4 does not interfere with the support body 6. Also, when receiving high-frequency radio waves that have been reflected in the sky above, the primary radiator 5 is temporarily accommodated in the accommodating portion 18, so that the primary radiator 5 does not interfere with the support body 7.

As shown in Fig. 1, the electromagnetic lens antenna device 1 includes a radome 19 for protecting the electromagnetic lenses 2, 3, the primary radiators 4, 5, and the support bodies 6, 7 from wind, rain, and snow. The radome 19 is supported on the table 8 and accommodates the electromagnetic lenses 2, 3, the primary radiators 4, 5, and the support bodies 6, 7. Fiber reinforced plastic (FRP) is suitable as the material of the radome 19 since it has a superior transparency to radio waves.

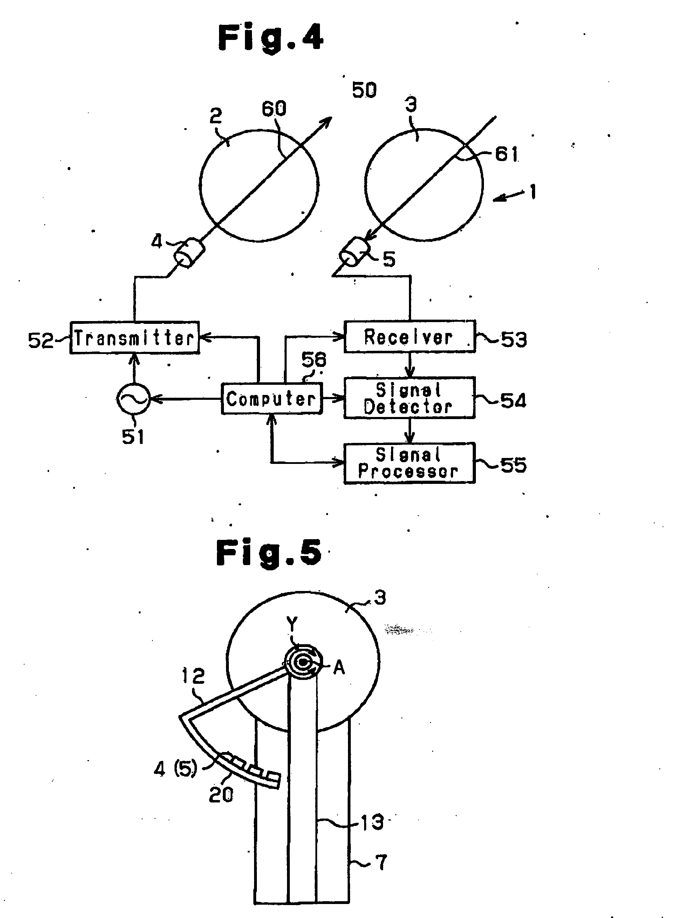

Hereafter, a weather radar apparatus 50 that uses the above described electromagnetic lens antenna device 1 (hereinafter, simply referred to as radar apparatus) will be described with reference to Fig. 4. Fig. 4 shows, among the components of the electromagnetic lens antenna device 1, the electromagnetic lenses 2, 3 and the primary radiators 4, 5, and the other components are omitted.

The radar apparatus 50 includes the electromagnetic lens antenna device 1, an oscillator 51, a transmitter 52, a receiver 53, a signal detector 54, and a signal processor 55. The oscillator 51 generates high-frequency signals. The transmitter 52 is connected to the oscillator 51 and the primary radiator 4 and amplifies high-frequency signals generated by the oscillator 51. The receiver 53 is connected to the primary radiator 5 and amplifier weak high-frequency radio waves that have been reflected on scattered in the sky above. The signal detector 54 is connected to the receiver 53, and detects signals received by the receiver 53. The signal processor 55 is connected to the signal detector 54. The signal processor 55 processes a signal detected by the signal detector 54 and computes weather information such as the size of a precipitation area and the precipitation amount.

The radar apparatus 50 includes a computer 56, which, serves as control means. The computer 56 contains an operating system (OS) such as UNIX (trademark), Linux (trademark), or Windows (trademark). By activating a radar control program, the oscillator 51, the transmitter 52, the receiver 53, the signal detector 54, the signal processor 55, and the drive units 9, 15 are controlled. The computer 56 is connected the signal processor 55 through a local area network (LAN). The computer 56 stores data computed by the signal processor 55 in a hard disk and graphically displays the data in real time.

In order to perform beam scanning on the sky above, the oscillator 51 generates a predetermined high-frequency signal and outputs the signal to the transmitter 52. Then, the transmitter 52 amplifies the high-frequency signal and outputs the signal to the primary radiator 4. The amplified high-frequency signal is emitted to the space as high-frequency radio wave 60 from the primary radiator 4 via the transmission electromagnetic lens 2. On the other hand, a weak high-frequency radio wave 61 reflected in the sky above reaches the primary radiator 5 via the reception electromagnetic lens 3, and is received by the receiver 53. The receiver 53 amplifies the received high-frequency signal and outputs the signal to the signal processor 55 via the signal detector 54. The signal processor 55 processes the signal detected by the signal detector 54 and obtains weather information such as the size of a precipitation area and the precipitation amount.

At this time, the primary radiators 4, 5 are rotated within a predetermined angular range in the elevation angle direction along the surfaces of the electromagnetic lenses 2, 3, and rotated in the azimuth direction. Accordingly, beam scanning (that is, volume scanning) on the entire space above the ground surface can be performed.

The foregoing example can be modified as follows.

For example, as shown in Fig. 5, the distal end of the arm 12 may be extended in the elevation angle direction Y, and a plurality of primary radiators 4, 5 may be provided on extended portions 20. Since this configuration permits a plurality of signals to be transmitted and received simultaneously, the synchronism of collected data is improved. Also, the scanning time in the elevation angle direction Y is reduced. In the case where a plurality of the reception and transmission primary radiators 4, 5 are provided on the extended portions 20 of the arm 12, the primary radiators 4, 5 are preferably arranged at five-degree intervals along the elevation angle direction since a plurality of signals are simultaneously received.

Considering the fact that a waveguide tube exhibits less transmission loss of high-frequency radio waves compared to a coaxial cable and has a superior mechanical strength, the arm 12 may be formed of a waveguide tube. If the arm 12, which is formed of a waveguide tube, is connected to the primary radiators 4, 5, the transmission loss is suppressed. Also, since the coaxial cable is not required, the space required for installation is reduced.

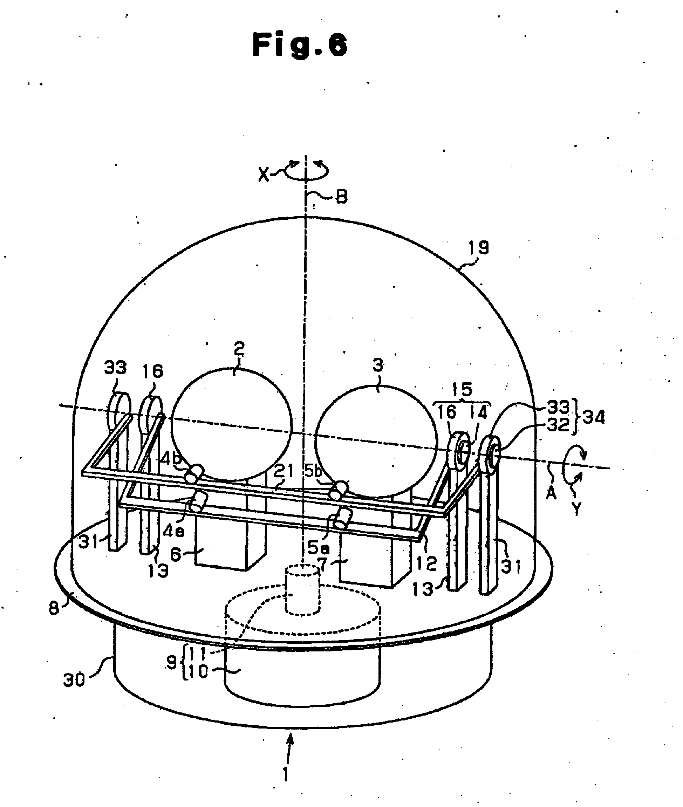

The present invention provides, as shown in Fig. 6, a second arm 21 in addition to the first arm 12, such as described in the foregoing example. The second arm 21 holds second primary radiators 4b, 5b and is rotatable in the direction of elevation angle. In this case, a pair of second support members 31 are provided on the table 8. the second arm 21 is attached to the upper ends of the second . support members 31 with drive units 34 each including a motor 33 and a shaft 32, so that the arm 21 is rotatable in the elevation angle direction. When drive force of the motors 33 is transmitted to the second arm 21 via the shafts 32, the second primary radiators 4b, 5b are rotated in a range between -90° and 90°, inclusive, about the first axis A together with the second arm 21. The drive units 34 may be attached to the support members 13, which support the first arm 12, instead to the second support members 31. The transmitter 52 is connected to the primary radiator 4a on the first arm 12 and the primary radiator 4b of the second arm 21 via a switch (not shown). The receiver 53 is connected to the primary radiator 5a on the first arm 12 and the primary radiator 5b of the second arm 21 via the switch (not shown). In response to a control signal from the computer 56, either one of the primary radiators 4a, 4b on the first or second arm 12, 21 is selected, and either one of the primary radiators 5a, 5b of the first or second arms 12, 21 is selected. If the switch is an electronic switch, the time required for switching is negligibly short compared to a mechanical switch. The switch may be located between the first primary radiators 4a, 5a and the transmitter 52, and between the second primary radiators 4b, 5b and the receiver 53.

In this case, volume scanning is started while fixing the elevation angle of the first arm 12 at 0°, the elevation angle of the second arm 21 at 45°, and the azimuth of the table 8 at 0°. First, the table 8 is rotated by 1° at a time in the azimuth direction with the switch switched to the primary radiators 4a, 5a of the first arm 12. When the azimuth of the table 8 is changed from 359° to 0°, the switch is switched from the first primary radiators 4a, 5a of the first arm 12 to the second primary radiators 4b, 5b of the second arm 21. Then, with the elevation angle of the second arm 21 being fixed to 45°, the table 8 is rotated by 1° at a time for performing scanning. While the scanning is being performed with the second arm 21, the first arm 12 is rotated by 1° in the elevation angle direction. When the azimuth of the table 8 is changed from 359° to 0°, the switch is switched from the second primary radiators 4b, 5b of the second arm 21 to the first primary radiators 4a, 5a of the first arm 12. Then, with the elevation angle of the first arm 12 being fixed to 1°, the table 8 is rotated by 1° at a time for performing scanning. While the scanning is being performed with the first arm 12, the second arm 21 is rotated by 1° in the elevation angle direction, so that the elevation angle of the second arm 21 becomes 96°. Thereafter, the same operation is repeated to continue the scanning. In this configuration, rotation of the table 8 does not need to be stopped. Also, the rotation of the table 8 does not need to be accelerated or decelerated. Therefore, compared to the case where only the first arm 12 is provided, the scanning time is reduced, and the speed of .the beam scanning is increased.

Two transmitters 52 and two receivers 53 may be provided, and a switch may be provided between the transmitters 52 and the oscillator 51 and between the receivers 53 and the primary radiator 5.

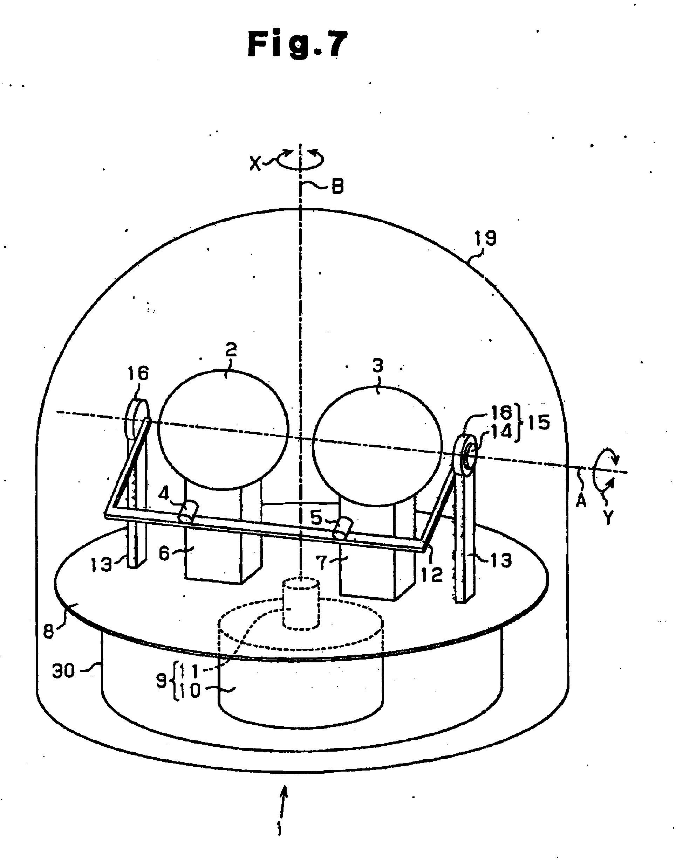

As shown in Fig. 7, the entire electromagnetic lens antenna device 1 may be covered with the radome 19. This reduces the weight on the table 8. Thus, the load on the drive unit 9 applied by rotation of the table 8 is reduced. Also, the appearance of the electromagnetic lens antenna device 1 is improved.

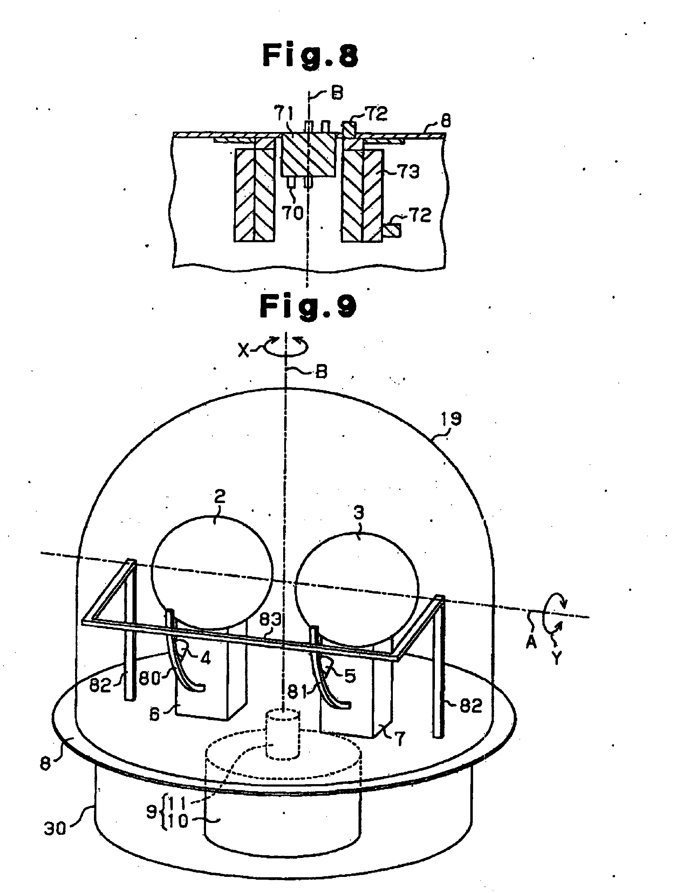

As shown in Fig. 8, a rotary joint 71 may be provided in a center of the table 8. The rotary joint 71 includes a connector 70 at each of the upper portion and the lower portion of the table 8. A coaxial cable or a waveguide tube for transmitting high-frequency signals is connected to each connector 70. This configuration prevents the axial cables from being tangled and the waveguide tube from being twisted. Also, a slip ring 73 having a connector 72 may be used together with the rotary joint 71. In this case, electricity is efficiently supplied to the motors 16 of the drive units 15 on the arm 12 from an electric power source located below the table 8.

In this embodiment, the transmission electromagnetic lens 2 and the primary radiator 4 may be used for receiving radio waves. This configuration doubles the sensitivity of the electromagnetic lens antenna device 1 and sharpens the beam width. Also, the reception electromagnetic lens 3 and the primary radiator 5 may be used for transmission.

The transmitter 52 or the receiver 53 may be located on the table 8. This configuration makes effective use of the space above the table 8 and thus reduces the size of the radar apparatus 50. Also, since the transmission loss between the electromagnetic lens antenna device 1, the transmitter 52, and the receiver 53 is suppressed, the observation performance is improved.

In this embodiment, the arm 12 may be formed to be arcuate. Also, the accommodating portions 17, 18 may be formed to have a substantially arcuate cross-section. In short, the shapes of the arm 12 and the accommodating portions 17, 18 may be changed as long as the transmission primary radiator 4 is located at the focal point of the transmission electromagnetic lens 2 and the reception primary radiator 5 is located at the focal point of the reception electromagnetic lens 3.

An apparatus shown in Fig. 9 includes a pair of support members 82 extending from the surface of the table 8, a substantially U-shaped arm 83 (support member) connecting the support members 82, a rail 80 (holding member) extending between the arm 83 and the support bodies 6, and a rail 81 (holding member) extending between the arm 83 and the support body 7. The rails 80, 81 each extend alang the surface of the corresponding one of the electromagnetic lenses 2, 3, that is, along an arc of a circle the center of which coincides with the first axis A. While being located at the focal points of the electromagnetic lenses 2, 3, the primary radiators 4, 5 are moved in the direction of the elevation angle along the rails 80, 81 and are rotated in the azimuth direction together with the table 8. Therefore, the same advantages as those of the electromagnetic lens antenna device 1 shown in Fig. 1 are obtained.

Since the primary radiators 4, 5 are rotated in the range between -90° and 90°, inclusive, about the first axis A, complicated volume scanning can be easily performed. Further, like the apparatus shown in Fig. 1, accommodating portions 17, 18 for accommodating the primary radiators 4, 5 may be formed in the support bodies 6, 7. Two or more primary radiators 4 and two or more primary radiators 5 may be provided. In this case, the first primary radiators 4, 5 transmit and receive a plurality of signals simultaneously, the synchronism of collected data is improved. Also, the scanning time in the elevation angle direction is reduced.

In the illustrated embodiments; the present invention is applied to radar apparatus having electromagnetic lens antenna device. However, the present invention may be applied to a communication antenna that receives radio waves for broadcasting or communication emitted from an antenna of a stationary satellite or an antenna fixed on the ground, and emits radio waves toward a satellite or another antenna.

### [Industrial Applicability]

Examples of application of the present invention include an electromagnetic lens antenna device that uses an electromagnetic lens for transmitting and receiving radio waves.

## Claims

1. A weather radar apparatus comprising an electromagnetic lens antenna device, the weather radar apparatus arranged to emit radio frequency signals to water droplets in the atmosphere and arranged to detect the size of a precipitation area and a precipitation amount by analyzing the radio frequency signals reflected in the atmosphere, the electromagnetic lens antenna device comprising:
first and second spherical electromagnetic lenses (2,3) for transmission and reception, each electromagnetic lens (2,3) being formed of a dielectric material, wherein the relative permittivity of each electromagnetic lens (2,3) changes at a predetermined rate along a radial direction;
a first transmission primary radiator (4a) located at a focal point of the first electromagnetic lens (2), the first transmission primary radiator (4a) being connected to an oscillator (51) arranged to generate the radio frequency signals;
a first reception primary radiator (5a) located at a focal point of the second electromagnetic lens (3), the first reception primary radiator (5a) being connected to a signal detector (54) arranged to detect the radio frequency signals reflected in the atmosphere;
a first holding member (12) holding the first transmission and reception primary radiators (4a,5a), the first holding member (12) arranged to rotate about a first axis (A) that extends through the centers of the electromagnetic lenses (2,3);
a rotating member (8) arranged to rotate about a second axis (B), the second axis (B) being perpendicular to the first axis (A);
a first support member (13) supporting the first holding member (12) on the rotating member (8),
wherein the first transmission and reception primary radiators (4a,5a) are arranged to be rotated about the first axis (A) together with the first holding member (12), and are arranged to be rotated about the second axis (B) together with the rotating member (8), and
a second transmission primary radiator (4b) located at the focal point of the first electromagnetic lens (2), the second transmission primary radiator (4b) being connected to the oscillator (51) arranged to generate the radio frequency signals,
a second reception primary radiator (5b) located at the focal point of the second electromagnetic lens (3), the second reception primary radiator (5b) being connected to the signal detector (54) arranged to detect the radio frequency signals reflected in the atmosphere;
a second holding member (21) holding the second transmission and reception primary radiators (4b,5b), the second holding member (21) arranged to rotate about the first axis (A); and
a second support member (31) supporting the second holding member (21) on the rotating member (8),
wherein the second transmission and reception primary radiators (4b,5b) are arranged to be rotated about the first axis (A) together with the second holding member (21), and are arranged to be rotated about the second axis (B) together with the rotating member (8)
the electromagnetic lens antenna device is arranged to set an elevation angle of the first holding member (12) at a first angle and set an elevation angle of the second holding member (21) at a second angle differing from the first angle, the electromagnetic lens antenna device further arranged such that with the device switched to the first transmission and reception primary radiators (4a,5a) the rotating member (8) is rotated about the second axis (B) for performing scanning with the first holding member (12), and the electromagnetic lens antenna device is arranged such that when an azimuth of the rotating member (8) arrives at predetermined angle it is switched from the first transmission and reception primary radiators (4a,5a) to the second transmission and reception primary radiators (4b,5b) to perform scanning with the second holding member (21), while the scanning is performed with the second holding member (21) the first holding member (12) is rotated about the first axis (A) by a predetermined angle in the elevation direction.

2. The weather radar apparatus according to claim 1, **characterised in that**, when the horizontal direction is defined as 0° and the vertically downward angle is defined as -90°, the holding member is rotatable in a range between -90° to 90° inclusive.

3. The weather radar apparatus according to claim 1 or claim 2, further comprising:
a transmitter connected to the first transmission primary radiator (4a) on the first holding member (12) and the second transmission primary radiator (4b) on the second holding member (21) via a switch; and
a receiver (53) connected to the first reception primary radiator (5a) on the first holding member (12) and the second reception primary radiator (5b) on the second holding member (21) via the switch,
wherein the switch is arranged to select either one of the first transmission and reception primary radiators (4a, 5a) on the first holding member (12) and either one of the second transmission and reception primary radiators (4B, 5B) on the secondholding member (21).

4. The weather radar apparatus according to claim 1 or claim 2, further comprising:
two transmitters (52) respectively connected to the first transmission primary radiator (4a) on the first holding member (12) and the second transmission primary radiator (4b) on the second holding member (21); and
two receivers (53) respectively connected to the first reception primary radiator (5a) on the first holding member (12) and the second reception primary radiator (5b) on the second holding member (21),
wherein a switch is provided between the transmitters (52) and the oscillator (51) and between the receivers (53) and the first and second reception primary radiators (5a, 5b).

5. A method of operating a weather radar apparatus, comprising first and second electromagnetic lenses (2, 3) for transmission and reception, each electromagnetic lens (2,3) being formed of a dielectric material, wherein the relative permittivity of each electromagnetic lens (2,3) changes at a predetermined rate along a radial direction; a first transmission primary radiator (4a) located at a focal point of the first electromagnetic lens (2), the first transmission primary radiator (4a) being connected to an oscillator (51) arranged to generate the radio frequency signals; a first reception primary radiator (5a) located at a focal point of the second electromagnetic lens (3), the first reception primary radiator (5a) being connected to a signal detector (54) arranged to detect the radio frequency signals reflected in the atmosphere; a first holding member (12) holding the first transmission and reception primary radiators (4a,5a), the first holding member (12) arranged to rotate about a first axis (A) that extends through the centers of the electromagnetic lenses (2,3); a rotating member (8) arranged to rotate about a second axis (B), the second axis (B) being perpendicular to the first axis (A); a first support member (13) supporting the first holding member (12) on the rotating member (8), wherein the first transmission and reception primary radiators (4a,5a) are arranged to be rotated about the first axis (A) together with the first holding member (12), and are arranged to be rotated about the second axis (B) together with the rotating member (8), and a second transmission primary radiator (4b) located at the focal point of the first electromagnetic lens (2), the second transmission primary radiator (4b) being connected to the oscillator (51) arranged to generate the radio frequency signals; a second reception primary radiator (5b) located at the focal point of the second electromagnetic lens (3), the second reception primary radiator (5b) being connected to the signal detector (54) arranged to detect the radio frequency signals reflected in the atmosphere; a second holding member (21) holding the second transmission and reception primary radiators (4b,5b), the second holding member (21) arranged to rotate about the first axis (A); and a second support member (31) supporting the second holding member (21) on the rotating member (8), the weather radar apparatus emitting radio frequency signals to water droplets in the atmosphere and detecting the size
of a precipitation area and a precipitation amount by analysing the radio frequency signals reflected in the atmosphere, the method comprising:
setting an elevation angle of the first holding member (12) at a first angle;
setting an elevation angle of the second holding member (21) at a second angle differing from the first angle;
switching the device to transmit and receive via the first transmission and reception primary radiators, respectively;
rotating the rotating member (8) about the second axis (B) and performing scanning with the first holding member (12),
when an azimuth of the rotating member (8) arrives at a predetermined angle the device switching from the first transmission and reception primary radiators to the second transmission and reception primary radiators,
performing scanning with the second holding member; and
during scanning of the second holding member rotating the first holding member about the first axis by a predetermined angle in the elevation direction.

## Patentansprüche

1. Wetterradarvorrichtung, die eine elektromagnetische Linsenantenneneinrichtung aufweist, wobei die Wetterradarvorrichtung vorgesehen ist, um Radiofrequenzsignale auf Wassertröpfchen in der Atmosphäre auszusenden, und vorgesehen ist, um die Größe eines Niederschlagsgebiets und einer Niederschlagsmenge durch Analysieren der Radiofrequenzsignale, die in der Atmosphäre reflektiert werden, zu detektieren, wobei die elektromagnetische Linsenantenneneinrichtung aufweist:
eine erste und zweite sphärische elektromagnetische Linse zum Senden und Empfangen, wobei jede elektromagnetische Linse (2, 3) aus einem dielektrischen Material ausgebildet ist, wobei die relative Permittivität jeder elektromagnetischen Linse (2, 3) sich mit einer bestimmten Rate entlang einer radialen Richtung ändert;
einen ersten primären Senderadiator (4a), der an einem Fokuspunkt der ersten elektromagnetischen Linse (2) angeordnet ist, wobei der erste primäre Senderadiator (4a) mit einem Oszillator (51) verbunden ist, der vorgesehen ist, um die Radiofrequenzsignale zu erzeugen;
einen ersten primären Empfangsradiator (5a), der an einem Fokuspunkt der zweiten elektromagnetischen Linse (3) angeordnet ist, wobei der erste primäre Empfangsradiator (5a) mit einem Signaldetektor (54) verbunden ist, der vorgesehen ist, um die Radiofrequenzsignale, die in der Atmosphäre reflektiert werden, zu detektieren;
ein erstes Halteelement (12), das den ersten primären Sende- und Empfangsradiator (4a, 5a) hält, wobei das erste Halteelement (12) vorgesehen ist, um sich um eine erste Achse (A) zu drehen, die sich durch das Zentrum der elektromagnetischen Linsen (2, 3) erstreckt;
ein Drehelement (8), das vorgesehen ist, um sich um eine zweite Achse (B) zu drehen, wobei die zweite Achse (B) senkrecht auf der ersten Achse (A) steht;
ein erstes Unterstützungselement (13), welches das erste Halteelement (12) an dem Drehelement (8) unterstützt,
wobei der erste primäre Sende- und Empfangsradiator (4a, 5a) vorgesehen sind, um sich gemeinsam mit dem ersten Halteelement (12) um die erste Achse (A) zu drehen, und vorgesehen sind, um sich gemeinsam mit dem Drehelement (8) um die zweite Achse (B) zu drehen, und
einen zweiten primären Senderadiator (4b), der an dem Fokuspunkt der ersten elektromagnetischen Linse (2) angeordnet ist, wobei der zweite primäre Senderadiator (4b) mit dem Oszillator (51) verbunden ist, der vorgesehen ist, um die Radiofrequenzsignale zu erzeugen,
einen zweiten primären Empfangsradiator (5b), der an dem Fokuspunkt der zweiten elektromagnetischen Linse (3) angeordnet ist, wobei der zweite primäre Empfangsradiator (5b) mit dem Signaldetektor (54) verbunden ist, der vorgesehen ist, um die Radiofrequenzsignale, die in der Atmosphäre reflektiert werden, zu detektieren;
ein zweites Halteelement (21), das den zweiten primären Sende- und Empfangsradiator (4b, 5b) hält, wobei das zweite Halteelement (21) vorgesehen ist, um sich um die erste Achse (A) zu drehen; und
ein zweites Unterstützungselement (31), welches das zweite Halteelement (21) an dem Drehelement (8) unterstützt,
wobei der zweite primäre Sende- und Empfangsradiator (4b, 5b) vorgesehen sind, um sich gemeinsam mit dem zweiten Halteelement (21) um die erste Achse (A) zu drehen, und vorgesehen sind, um sich gemeinsam mit dem Drehelement (8) um die zweite Achse (B) zu drehen,
wobei die elektromagnetische Linsenantenneneinrichtung vorgesehen ist, um einen Höhenwinkel des ersten Halteelements (12) auf einen ersten Winkel festzulegen und einen Höhenwinkel des zweiten Halteelements (21) auf einen zweiten Winkel festzulegen, der sich von dem ersten Winkel unterscheidet, wobei die elektromagnetische Linsenantenneneinrichtung ferner so vorgesehen ist, dass, wobei die Einrichtung auf die ersten primären Empfangsradiatoren (4a, 5b) geschaltet ist, das Drehelement (8) zum Ausführen eines Scans mit dem ersten Halteelement (12) um die zweite Achse (B) gedreht wird, und die elektromagnetische Linsenantenneneinrichtung so vorgesehen ist, dass, wenn ein Azimut des Drehelements (8) einen bestimmten Winkel erreicht, von dem ersten primären Sende- und Empfangsradiator (4a, 5b) auf den zweiten primären Sende- und Empfangsradiator (4b, 5b) umgeschaltet wird, um ein Scannen mit dem zweiten Halteelement (21) durchzuführen, wobei, während das Scans mit dem zweiten Halteelement (21) durchgeführt wird, das erste Halteelement (12) um die erste Achse (A) um einen bestimmten Winkel in der Höhenrichtung gedreht wird.

2. Wetterradarvorrichtung nach Anspruch 1, **dadurch gekennzeichnet, dass**, wenn die horizontale Richtung als 0° definiert ist und der vertikale, nach unten gerichtete Winkel als -90° definiert ist, das Halteelement in einem Bereich von -90° bis 90° drehbar ist.

3. Wetterradarvorrichtung nach Anspruch 1 oder 2, wobei diese ferner aufweist:
einen Sender, der mit dem ersten primären Senderadiator (4a) an dem ersten Halteelement (12) und dem zweiten primären Senderadiator (4b) an dem zweiten Halteelement (21) über einen Schalter verbunden ist; und
einen Empfänger (53), der mit dem ersten primären Empfangsradiator (5a) an dem ersten Halteelement (12) und dem zweiten primären Empfangsradiator (5b) an dem zweiten Halteelement (21) über den Schalter verbunden ist,
wobei der Schalter vorgesehen ist, um entweder den ersten primären Sende- oder Empfangsradiator (4a, 5b) an dem ersten Halteelement (12) und entweder den zweiten primären Sende- oder Empfangsradiator (4b, 5b) an dem zweiten Halteelement (21) auszuwählen.

4. Wetterradarvorrichtung nach Anspruch 1 oder 2, wobei diese ferner aufweist:
zwei Sender (52), die entsprechend mit dem ersten primären Senderadiator (4a) an dem ersten Halteelement (12) und dem zweiten primären Senderadiator (4b) an dem zweiten Halteelement (21) verbunden sind; und
zwei Empfänger (53), die entsprechend mit dem ersten primären Empfangsradiator (5a) an dem ersten Halteelement (12) und dem zweiten primären Empfangsradiator (5b) an dem zweiten Halteelement (21) verbunden sind,
wobei ein Schalter zwischen den Sendern (52) und dem Oszillator (51) und zwischen den Empfängern (53) und den ersten und zweiten primären Empfangsradiatoren (5a, 5b) vorgesehen ist.

5. Verfahren zum Betreiben einer Wetterradarvorrichtung, wobei diese aufweist: eine erste und zweite elektromagnetische Linse (2, 3) zum Senden und Empfangen, wobei jede elektromagnetische Linse (2, 3) aus einem dielektrischen Material ausgebildet ist, wobei die relative Permittivität jeder elektromagnetischen Linse (2, 3) sich mit einer bestimmten Rate entlang einer radialen Richtung ändert;
einen ersten primären Senderadiator (4a), der an einem Fokuspunkt der ersten elektromagnetischen Linse (2) vorgesehen ist, wobei der erste primäre Senderadiator (4a) mit einem Oszillator (51) verbunden ist, der vorgesehen ist, um die Radiofrequenzsignale zu erzeugen;
einen ersten primären Empfangsradiator (5a), der an einem Fokuspunkt der zweiten elektromagnetischen Linse (3) vorgesehen ist, wobei der erste primäre Empfangsradiator (5a) mit einem Signaldetektor (54) verbunden ist, der vorgesehen ist, um die Radiofrequenzsignale, die in der Atmosphäre reflektiert werden, zu empfangen;
ein erstes Halteelement (12), das den ersten primären Sende- und Empfangsradiator (4a, 5a) hält, wobei das erste Halteelement (12) vorgesehen ist, um sich um eine erste Achse (A) zu drehen, die sich durch die Zentren der elektromagnetischen Linsen (2, 3) erstreckt;
ein Drehelement (8), das vorgesehen ist, um sich um eine zweite Achse (B) zu drehen, wobei die zweite Achse (B) senkrecht auf der ersten Achse (A) steht;
ein erstes Unterstützungselement (13), welches das erste Halteelement (12) an dem Drehelement (8) unterstützt,
wobei der erste primäre Sende- und Empfangsradiator (4a, 5a) vorgesehen sind, um sich gemeinsam mit dem ersten Halteelement (12) um die erste Achse (A) zu drehen, und vorgesehen sind, um sich gemeinsam mit dem Drehelement (8) um die zweite Achse (B) zu drehen, und
einen zweiten primären Senderadiator (4b), der an dem Fokuspunkt der ersten elektromagnetischen Linse (2) angeordnet ist, wobei der zweite primäre Senderadiator (4b) mit dem Oszillator (51) verbunden ist, der vorgesehen ist, um die Radiofrequenzsignale zu erzeugen,
einen zweiten primären Empfangsradiator (5b), der an dem Fokuspunkt der zweiten elektromagnetischen Linse (3) angeordnet ist, wobei der zweite primäre Empfangsradiator (5b) mit dem Signaldetektor (54) verbunden ist, der vorgesehen ist, um die Radiofrequenzsignale zu detektieren, die in der Atmosphäre reflektiert werden;
ein zweites Halteelement (21), das den zweiten primären Sende- und Empfangsradiator (4b, 5b) hält, wobei das zweite Halteelement (21) vorgesehen ist, um sich um die erste Achse (A) zu drehen; und
ein zweites Unterstützungselement (31), welches das zweite Halteelement (21) an dem Drehelement (8) unterstützt,
wobei die Wetterradarvorrichtung Radiofrequenzsignale auf Wassertröpfchen in der Atmosphäre aussendet und die Größe eines Niederschlagsgebiets und einer Niederschlagsmenge durch Analysieren der Radiofrequenzsignale, die in der Atmosphäre reflektiert werden, detektiert, wobei das Verfahren aufweist:
Festlegen eines Höhenwinkels des ersten Halteelements (12) auf einen ersten Winkel;
Festlegen eines Höhenwinkels des zweiten Halteelements (21) auf einen zweiten Winkel, der sich von dem ersten Winkel unterscheidet;
Schalten der Einrichtung zum Senden und Empfangen entsprechend über den ersten primären Sende- und Empfangsradiator;
Drehen des Drehelements (8) um die zweite Achse (B) und Ausführen eines Scans mit dem ersten Halteelement (12),
wobei, wenn ein Azimut des Drehelements (8) einen bestimmten Winkel erreicht, die Einrichtung von dem ersten primären Sende- und Empfangsradiator auf den zweiten primären Sende- und Empfangsradiator umschaltet,
Durchführen eines Scans mit dem zweiten Halteelement; und
während des Scans des zweiten Halteelements, Drehen des ersten Halteelements um die erste Achse um einen bestimmten Winkel in der Höhenrichtung.

## Revendications

1. Appareil radar météorologique comprenant un dispositif d'antenne à lentilles électromagnétiques, l'appareil radar météorologique étant agencé pour émettre des signaux à radiofréquence sur les gouttes d'eau dans l'atmosphère et agencé pour détecter la taille d'une zone de précipitation et une quantité de précipitation en analysant les signaux à radiofréquence reflétés dans l'atmosphère, le dispositif d'antenne à lentilles électromagnétiques comprenant :
des première et seconde lentilles électromagnétiques sphériques (2, 3) pour la transmission et la réception, chaque lentille électromagnétique (2, 3) étant formée avec un matériau diélectrique, dans lequel la constante diélectrique relative de chaque lentille électromagnétique (2, 3) change à une vitesse prédéterminée le long d'une direction radiale ;
un premier radiateur principal de transmission (4a) positionné à un point focal de la première lentille électromagnétique (2), le premier radiateur principal de transmission (4a) étant connecté à un oscillateur (51) agencé pour générer les signaux à radiofréquence ;
un premier radiateur principal de réception (5a) positionné à un point focal de la seconde lentille électromagnétique (3), le premier radiateur principal de réception (5a) étant connecté à un détecteur de signaux (54) agencé pour détecter les signaux à radiofréquence reflétés dans l'atmosphère ;
un premier élément de maintien (12) maintenant les premiers radiateurs principaux de transmission et de réception (4a, 5a), le premier élément de maintien (12) étant agencé pour tourner autour d'un premier axe (A) qui s'étend à travers les centres des lentilles électromagnétiques (2, 3) ;
un élément rotatif (8) agencé pour tourner autour d'un second axe (B), le second axe (B) étant perpendiculaire au premier axe (A) ;
un premier élément de support (13) supportant le premier élément de maintien (12) sur l'élément rotatif (8),
dans lequel les premiers radiateurs principaux de transmission et de réception (4a, 5a) sont agencés pour être entraînés en rotation autour du premier axe (A) conjointement avec le premier élément de maintien (12), et sont agencés pour être entraînés en rotation autour du second axe (B) conjointement avec l'élément rotatif (8), et
un second radiateur principal de transmission (4b) positionné au point focal de la première lentille électromagnétique (2), le second radiateur principal de transmission (4b) étant connecté à l'oscillateur (51) agencé pour générer les signaux à radiofréquence,
un second radiateur principal de réception (5b) positionné au point focal de la seconde lentille électromagnétique (3), le second radiateur principal de réception (5b) étant raccordé au détecteur de signaux (54) agencé pour détecter les signaux à radiofréquence reflétés dans l'atmosphère ;
un second élément de maintien (21) maintenant les seconds radiateurs principaux de transmission et de réception (4b, 5b), le second élément de maintien (21) étant agencé pour tourner autour du premier axe (A) ; et
un second élément de support (31) supportant le second élément de maintien (21) sur l'élément rotatif (8),
dans lequel les seconds radiateurs principaux de transmission et de réception (4b, 5b) sont agencés pour être entraînés en rotation autour du premier axe (A) conjointement avec le second élément de maintien (21), et sont agencés pour être entraînés en rotation autour du second axe (B) conjointement avec l'élément rotatif (8),
le dispositif d'antenne à lentilles électromagnétiques est agencé pour régler un angle d'élévation du premier élément de maintien (12) sur un premier angle et régler un angle d'élévation du second élément de maintien (21) sur un second angle différent du premier angle, le dispositif d'antenne à lentilles électromagnétiques étant en outre agencé de sorte qu'avec le dispositif commuté sur les premiers radiateurs principaux de transmission et de réception (4a, 5a), l'élément rotatif (8) tourne autour du second axe (B) pour réaliser le balayage avec le premier élément de maintien (12), et le dispositif d'antenne à lentilles électromagnétiques est agencé de sorte que lorsque un azimut de l'élément rotatif (8) arrive à l'angle prédéterminé, il passe des premiers radiateurs principaux de transmission et de réception (4a, 5a) aux seconds radiateurs principaux de transmission et de réception (4b, 5b) pour réaliser le balayage avec le second élément de maintien (21), alors que le balayage est réalisé avec le second élément de maintien (21), le premier élément de maintien (12) tourne autour du premier axe (A) selon un angle prédéterminé dans la direction d'élévation.

2. Appareil radar météorologique selon la revendication 1, **caractérisé en ce que**, lorsque la direction horizontale est définie comme étant 0° et que l'angle verticalement descendant est défini comme étant -90°, l'élément de maintien peut tourner sur une plage comprise entre -90° et 90° y compris.

3. Appareil radar météorologique selon la revendication 1 ou la revendication 2, comprenant en outre :
un émetteur connecté au premier radiateur principal de transmission (4a) sur le premier élément de maintien (12) et au second radiateur principal de transmission (4b) sur le second élément de maintien (21) via un commutateur ; et
un récepteur (53) connecté au premier radiateur principal de réception (5a) sur le premier élément de maintien (12) et au second radiateur principal de réception (5b) sur le second élément de maintien (21) via le commutateur,
dans lequel le commutateur est agencé pour sélectionner l'un des premiers radiateurs principaux de transmission et de réception (4a, 5a) sur le premier élément de maintien (12) et l'un des seconds radiateurs principaux de transmission et de réception (4b, 5b) sur le second élément de maintien (21).

4. Appareil radar météorologique selon la revendication 1 ou la revendication 2, comprenant en outre :
deux émetteurs (52) respectivement connectés au premier radiateur principal de transmission (4a) sur le premier élément de maintien (12) et au second radiateur principal de transmission (4b) sur le second élément de maintien (21) ; et
deux récepteurs (53) respectivement connectés au premier radiateur principal de réception (5a) sur le premier élément de maintien (12) et au second radiateur principal de réception (5b) sur le second élément de maintien (21),
dans lequel un commutateur est prévu entre les émetteurs (52) et l'oscillateur (51) et entre les récepteurs (53) et les premiers et seconds radiateurs principaux de réception (5a, 5b).

5. Procédé pour faire fonctionner un appareil radar météorologique, comprenant des première et seconde lentilles électromagnétiques (2, 3) pour la transmission et la réception, chaque lentille électromagnétique (2, 3) étant formée avec un matériau diélectrique, dans lequel la constante diélectrique relative de chaque lentille électromagnétique (2, 3) change à une vitesse prédéterminée le long d'une direction radiale ; un premier radiateur principal de transmission (4a) positionné à un point focal de la première lentille électromagnétique (2), le premier radiateur principal de transmission (4a) étant connecté à un oscillateur (51) agencé pour générer des signaux à radiofréquence ; un premier radiateur principal de réception (5a) positionné à un point focal de la seconde lentille électromagnétique (3), le premier radiateur principal de réception (5a) étant connecté à un détecteur de signaux (54) agencé pour détecter les signaux à radiofréquence reflétés dans l'atmosphère ; un premier élément de maintien (12) maintenant les premiers radiateurs principaux de transmission et de réception (4a, 5a), le premier élément de maintien (12) étant agencé pour tourner autour d'un premier axe (A) qui s'étend à travers les centres des lentilles électromagnétiques (2, 3) ; un élément rotatif (8) agencé pour tourner autour d'un second axe (B), le second axe (B) étant perpendiculaire au premier axe (A) ; un premier élément de support (13) supportant le premier élément de maintien (12) sur l'élément rotatif (8), dans lequel les premiers radiateurs principaux de transmission et de réception (4a, 5a) sont agencés pour être entraînés en rotation autour du premier axe (A) conjointement avec le premier élément de maintien (12) et sont agencés pour être entraînés en rotation autour du second axe (B) conjointement avec l'élément rotatif (8), et un second radiateur principal de transmission (4b) positionné au point focal de la première lentille électromagnétique (2), le second radiateur principal de transmission (4b) étant connecté à l'oscillateur (51) agencé pour générer les signaux à radiofréquence ; un second radiateur principal de réception (5b) positionné au point focal de la seconde lentille électromagnétique (3), le second radiateur principal de réception (5b) étant connecté au détecteur de signaux (54) agencé pour détecter les signaux à radiofréquence reflétés dans l'atmosphère ; un second élément de maintien (21) maintenant les seconds radiateurs principaux de transmission et de réception (4b, 5b), le second élément de maintien (21) étant agencé pour tourner autour du premier axe (A) ; et un second élément de support (31) supportant le second élément de maintien (21) sur l'élément rotatif (8), l'appareil radar météorologique émettant des signaux à radiofréquence sur les gouttes d'eau dans l'atmosphère et détectant la taille d'une zone de précipitation et une quantité de précipitation en analysant les signaux à radiofréquence reflétés dans l'atmosphère, le procédé comprenant les étapes consistant à :
régler un angle d'élévation du premier élément de maintien (12) sur un premier angle ;
régler un angle d'élévation du second élément de maintien (21) sur un second angle différent du premier angle ;
commuter le dispositif pour transmettre et recevoir via les premiers radiateurs principaux de transmission et de réception, respectivement ;
faire tourner l'élément rotatif (8) autour du second axe (B) et réaliser le balayage avec le premier élément de maintien (12),
lorsqu'un azimut de l'élément rotatif (8) arrive à un angle prédéterminé, le dispositif passe des premiers radiateurs principaux de transmission et de réception aux seconds radiateurs principaux de transmission et de réception,
réaliser le balayage avec le second élément de maintien ;
et
pendant le balayage du second élément de maintien, faire tourner le premier élément de maintien autour du premier axe selon un angle prédéterminé dans la direction d'élévation.
